# EUROPÄISCHE PATENTSCHRIFT

(11) **EP 2 384 936 B1**
(45) Veröffentlichungstag und Bekanntmachung des Hinweises auf die Patenterteilung: **27.07.2016**
(21) Anmeldenummer: 11003638.1
(22) Anmeldetag: 04.05.2011
(51) Int. Cl.: B60Q 1/32, F21V 23/04, H05B 37/02, G07C 1/00

(54) **Verfahren zur Steuerung wenigstens eines Beleuchtungssystems eines Kraftfahrzeugs und Kraftfahrzeug**
Method for controlling at least one lighting system of a motor vehicle and motor vehicle
Procédé de commande d'au moins un système d'éclairage d'un véhicule automobile et véhicule automobile

(30) Priorität: 08.05.2010 DE 102010019829
(43) Veröffentlichungstag der Anmeldung: 09.11.2011
(73) Patentinhaber: Audi AG, 85045 Ingolstadt (DE)
(72) Erfinder: Mayer, Michael, 85051 Ingolstadt (DE); Ott, Tobias, 85283 Wolnzach (DE)
(74) Vertreter: Thielmann, Frank

(56) Entgegenhaltungen:
- EP-A2- 1 039 075
- DE-A1- 10 064 141
- DE-A1-102005 041 261
- DE-B3-102005 032 402
- US-A1- 2004 104 815
- US-A1- 2006 235 753

## Beschreibung

Die Erfindung betrifft ein Verfahren zur Steuerung wenigstens eines Beleuchtungssystems eines Kraftfahrzeugs sowie ein Kraftfahrzeug.

Es sind Steuerverfahren bekannt, die eine Aktivierung von Beleuchtungssystemen eines Kraftfahrzeugs, konkret der Lichtquellen der Beleuchtungssysteme, auch erlauben, wenn sich niemand im Kraftfahrzeug befindet. Solche Beleuchtungsszenarien, die beispielsweise unter den Begriffen "Coming Home" und "Leaving Home" bekannt sind, sollen beispielsweise dazu dienen, einem ankommenden Fahrer und gegebenenfalls weiteren Personen den Weg zum Kraftfahrzeug oder vom Kraftfahrzeug weg auszuleuchten. Dazu wird üblicherweise ein Schlüssel bzw. eine Entriegelungsvorrichtung vom Fahrer mit sich geführt, der bzw. die ein Betätigungselement aufweist, mittels dessen sich die auf das Beleuchtungssystem bezogenen Funktionen des Kraftfahrzeugs aktivieren lassen. Dabei kann insbesondere vorgesehen sein, dass diese Aktivierung an die Entriegelung des Kraftfahrzeugs selbst gebunden ist.

Hauptsächlich werden hierbei Innenlichtsysteme und Außenlichtsysteme entsprechend angesteuert. So kann beispielsweise vorgesehen sein, dass bei Ankommen eines Fahrers und einer entsprechenden Bedienaktion die Umgebung des Kraftfahrzeugs und der Innenraum des Kraftfahrzeugs durch die entsprechenden Beleuchtungssysteme ausgeleuchtet werden.

Die beschriebenen Fahrzeugfunktionen bei verriegeltem Fahrzeug fordern also letztlich eine unmittelbare Bedienfunktion, so dass sie vom Kunden nicht direkt erlebbar sind. Gleichzeitig benötigen die angesteuerten Beleuchtungssysteme aufgrund der globalen Aktivierung sehr viel Strom. Beispielsweise kann vorgesehen sein, dass bei einer "Leaving Home"-Funktion oder einer "Coming Home"-Funktion immer die Front- und die Heckbeleuchtung als Lichtquellen aktiviert werden.

US 2006/0235753 A1 offenbart ein fahrzeugseitiges Benutzergastlichkeitssystem zur Unterstützung der Benutzung des Fahrzeugs und zur Unterhaltung des Benutzers, wenn dieser sich dem Fahrzeug nähert, in das Fahrzeug einsteigt, das Fahrzeug verlässt oder sich von dem Fahrzeug entfernt.

DE 10 2006 033 883 A1 betrifft ein fahrzeugseitiges Beleuchtungssteuersystem und -verfahren. Dabei wird vorgeschlagen, dass ein mobiler Kommunikator Anfragesignale mehrerer Sender mit getrennten Kommunikationsbereichen empfängt, wobei der mobile Kommunikator in Reaktion auf das empfangene Anfragesignal ein Antwortsignal an einen fahrzeugseitigen Empfänger übermittelt, woraufhin basierend auf dem empfangenen Antwortsignal mehrere Beleuchtungsvorrichtungen, welche am Fahrzeug installiert sind, gesteuert werden. Eine fahrzeugseitige Steuereinrichtung schaltet eine der Beleuchtungsvorrichtungen ein, die zu dem bestimmten der mehreren Sender korrespondiert. Nach einem anderen Aspekt kann die fahrzeugseitige Einheit den Ort des mobilen Kommunikators basierend auf einem empfangenen Signal bestimmen und eine oder eine begrenzte Zahl von Beleuchtungsvorrichtungen einschalten, die näher an einem bestimmten Ort des mobilen Kommunikators liegen als andere Beleuchtungsvorrichtungen.

DE 103 38 756 B4 offenbart ein Scheinwerfersystem eines Kraftfahrzeuges. Darin wird vorgeschlagen, eine Lichtverteilungssteuerung zur Ansteuerung von Scheinwerfereinrichtungen mit änderbarer Lichtverteilung zu verwenden, um eine "Follow-me-home-Schaltung" zu realisieren. Der Lichtverteilungssteuerung kann dabei eine Eingabevorrichtung zugeordnet sein, mit der die individuelle Lichtverteilung einzustellen ist. Der Fahrer wählt dann manuell eine abgespeicherte Lichtverteilung aus. Zusätzlich kann die Lichtverteilungssteuerung eine Ortungseinrichtung zur Ortung eines mobilen Senders aufweisen und abhängig von der georteten Richtung die Lichtverteilung der Scheinwerfereinrichtung steuern.

Eine Vorrichtung zur Ausleuchtung zumindest eines Teils der Umgebung eines geparkten Fahrzeuges ist durch DE 100 34 379 A1 offenbart. Dabei soll eine Detektionsvorrichtung für Bewegungen vorgesehen sein, deren Ausgangsdaten als Eingangsdaten für eine automatische Steuereinheit dienen, die die Ausleuchtung entsprechend der Bewegungen in der Nähe des Fahrzeuges regelt. Als Detektionsvorrichtung kann eine IR-Kamera, eine Video-Kamera oder ein Ultraschall-Sensor verwendet werden.

Der Erfindung liegt daher die Aufgabe zugrunde, ein Steuerverfahren zu schaffen, das unabhängig von einer Bedienaktion realisierbar ist und es insbesondere auch erlaubt, eine energieeffizientere Ansteuerung der Beleuchtungssysteme zu realisieren.

Zur Lösung dieser Aufgabe ist erfindungsgemäß ein Verfahren gemäß Patentanspruch 1 vorgesehen..

Die Erfindung schlägt also vor, eine Sendeeinrichtung einzusetzen, die kontinuierlich und/oder intermittierend ein Signal aussendet, das von einer Sensoreinrichtung, die wenigstens zwei Empfangseinrichtungen umfasst, empfangen werden kann. Die Sendeeinrichtung ist dabei beispielsweise vom Fahrer bei sich zu tragen und kann als Teil eines Schlüssels oder einer Entriegelungseinrichtung realisiert werden. Es ist hier also nicht eine Bedienaktion für den Betrieb des Beleuchtungssystems ausschlaggebend, sondern es wird letztlich ständig überprüft, ob sich die Sendeeinrichtung im Umfeld des Kraftfahrzeugs befindet und gegebenenfalls wo genau sie sich befindet. In einer ersten, nicht zur Erfindung gehörenden Ausgestaltung des erfindungsgemäßen Verfahrens kann mithin vorgesehen sein, dass die Sensoreinrichtung nur eine Empfangseinrichtung umfasst und konsequenterweise die Ortsinformation lediglich beschreibt, ob sich die Sendeeinrichtung in einem vorbestimmten Bereich um das Kraftfahrzeug herum befindet, wobei der vorbestimmte Bereich beispielsweise durch die Reichweite der Sendeeinrichtung definiert werden kann. Wird auf diese Weise festgestellt, dass sich ein Fahrer bzw. eine andere Person mit einer Sendeeinrichtung innerhalb des vorbestimmten Bereichs um das Kraftfahrzeug befindet (Ortsinformation), können vollautomatisch die Beleuchtungssysteme zur Ausführung bestimmter Fahrzeugfunktionen, beispielsweise "Coming Home" oder "Leaving Home", angesteuert werden. Dabei sei an dieser Stelle angemerkt, dass das von der Sendeeinrichtung ausgesendete Signal idealerweise kraftfahrzeugspezifisch sein sollte, das bedeutet, jedem Kraftfahrzeug wird wenigstens ein von den Signalen anderer Kraftfahrzeuge unterscheidbares Signal zugeordnet. Die Signale sind bevorzugt Funksignale.

Beim erfindungsgemäßen Verfahren werden mithin nicht alle Systeme des Kraftfahrzeugs im Verriegelungszustand in einen Ruhezustand versetzt, sondern zumindest die Sensoreinrichtung bleibt aktiv, um die Signale der Sendeeinrichtung detektieren zu können. Empfängt sie solche oder ist eine vorbestimmte Bedingung, worauf im Folgenden noch näher eingegangen wird, erfüllt, so können das oder die Beleuchtungssysteme aktiviert und entsprechend angesteuert werden. Der Datenaustausch zwischen verschiedenen Fahrzeugsystemen kann dabei beispielsweise über einen Fahrzeugbus erfolgen. Der Sensoreinrichtung kann also beispielsweise ein Steuergerät zugeordnet sein, das die Ortsinformation ermittelt und diese über ein Bussystem, beispielsweise einen CAN-Bus, anderen Steuergeräten zur Verfügung stellt, insbesondere einem Steuergerät für das oder ein Beleuchtungssystem, welche dann die Ortsinformation entsprechend nutzen kann, um Fahrzeugfunktionen zu realisieren; gegebenenfalls nach einer Aktivierung des entsprechenden Fahrzeugsystems.

Konkret kann vorgesehen sein, dass wenigstens eine Lichtquelle des oder wenigstens eines Beleuchtungssystems aktiviert wird, wenn die Ortsinformation eine Position der Sendeeinrichtung in einem vorbestimmten Bereich um das Kraftfahrzeug anzeigt und/oder alle Lichtquellen des oder aller Beleuchtungssysteme deaktiviert werden, wenn die Ortsinformation eine Position der Sendeeinrichtung außerhalb des Bereichs anzeigt. Wie bereits beschrieben, ist es in einer einfachen Ausführungsform denkbar, dass die Ortsinformation letztlich binär angibt, ob sich die Sendeeinrichtung innerhalb des Bereichs befindet oder nicht. Jedoch lässt sich der hier beschriebene Bereich bei einer differenzierteren Ortsinformation, worauf im Folgenden noch näher eingegangen werden wird, auch zur differenzierteren Ansteuerung der Beleuchtungssysteme nutzen; nichtsdestotrotz kann in jedem dieser Fälle vorgesehen sein, dass der hier beschriebene vorbestimmte Bereich letztlich definiert, wann das Beleuchtungssystem aktiv bzw. inaktiv ist. Sollen mehrere Beleuchtungssysteme angesteuert werden, so kann selbstverständlich für jedes Beleuchtungssystem ein eigener vorbestimmter Bereich vorgesehen werden, wenn die technischen Möglichkeiten dies erlauben.

Bei der vorliegenden Erfindung wird eine eine den Abstand von dem Kraftfahrzeug beschreibende Abstandsinformation und eine Richtungsinformation bezüglich des Kraftfahrzeugs enthaltende Ortsinformation ermittelt und verwendet. Wie aufgrund eines Signals eine Richtungs- bzw. Abstandsinformation ermittelt werden kann, ist vor allem in der Funktechnologie, die hier bevorzugt wird, weithin bekannt. Im vorliegenden Fall ist eine Information über die Position der Sendeeinrichtung in der horizontalen Ebene ausreichend, so dass, wenn die Uhren der Sendeeinrichtung und der Sensoreinrichtung synchronisiert sind, zwei Empfangseinrichtungen als Teil der Sensoreinrichtung ausreichend sind. Es wird gemäß einer ersten Erfindungsalternative die TOA-Methode (Time of Arrival) eingesetzt werden, um die differenziertere Ortsinformation zu erhalten. Werden drei in der horizontalen Ebene an verschiedenen Orten positionierte Empfangseinrichtungen genutzt, so ist eine Synchronisation der Uhren zur Ermittlung einer zweidimensionalen Position nicht mehr erforderlich, es wird dann gemäß einer zweiten Erfindungsalternative das TDOA-Verfahren (Time Difference of Arrival) eingesetzt. Selbstverständlich ist es im Rahmen des erfindungsgemäßen Verfahrens grundsätzlich auch denkbar, dreidimensionale Positionen zu bestimmen, wofür dann wenigstens drei entsprechend angeordnete Empfangseinrichtungen in der Sensoreinrichtung enthalten sein sollten.

Eine Richtungsinformation kann mit besonderem Vorteil derart genutzt werden, dass bei einem mehrere Lichtquellen umfassenden Beleuchtungssystem eine Aktivierung und/oder eine Regelung der Helligkeit der verschiedenen Richtungen zugeordneten Lichtquellen abhängig von der Richtung erfolgt. Auf diese Weise ist also nicht mehr vorgesehen, alle Lichtquellen anzuschalten bzw. mit voller Helligkeit zu betreiben, wenn bekannt ist, in welcher Richtung sich die Sendeeinrichtung befindet. Dann werden mit besonderem Vorteil nur die Lichtquellen betrieben, die der entsprechenden Richtung oder benachbarten Richtungen zugeordnet sind, wobei die benachbarten Richtungen zugeordneten Lichtquellen dann insbesondere mit geringerer Helligkeit angesteuert werden können. Auf diese Weise ist es möglich, Energie einzusparen, indem Lichtquellen in Bereichen, die angesichts der Richtung der Sendeeinrichtung irrelevant sind, vom Betrieb ausgenommen werden können. Vorgesehen sein kann beispielsweise bei Ansteuerung eines Außenlichtsystems, das bei einer Annäherung des Fahrers von vorne nur die Frontscheinwerfer aktiviert werden; die Heckbeleuchtung bleibt dann ausgeschaltet. Analog bzw. zusätzlich können bei der Ansteuerung eines Innenlichtsystems beispielsweise bei Annäherung eines Fahrers von einer Seite zunächst nur auf dieser Seite befindliche Leselichte oder ähnliche Lichtquellen im Innenraum aktiviert werden. In jedem Fall ist so ein energieoptimierter, zielgerichteter Betrieb der Lichtquellen von Beleuchtungssystemen möglich.

Die Helligkeit wenigstens einer Lichtquelle wenigstens eines Beleuchtungssystems wird in Abhängigkeit des Abstands geregelt. Auch der Abstand kann also berücksichtigt werden, um einen auf die Bedürfnisse des Fahrers bzw. eine energieoptimierte Ansteuerung bezogenen Betrieb der Vorrichtungssysteme zu ermöglichen. In einer zweckmäßigen Ausgestaltung kann dabei vorgesehen sein, dass bei einem Außenlichtsystem die Helligkeit der wenigstens einen Lichtquelle mit abnehmendem Abstand abnimmt und/oder bei einem Innenbeleuchtungssystem die Helligkeit der wenigstens einen Lichtquelle mit abnehmendem Abstand zunimmt. Diese Ausgestaltung beruht darauf, dass ein noch weiter vom Kraftfahrzeug entfernter Fahrer mehr Licht braucht, um seinen gesamten Weg bis zum Kraftfahrzeug auszuleuchten. Nähert er sich dem Kraftfahrzeug, können die Lichtquellen des Außenlichtsystems langsam dunkler geschaltet werden. Im Gegensatz hierzu ist die Helligkeit im Innenraum für den Fahrer relevanter, wenn er sich dem Kraftfahrzeug nähert, so dass hier vorgesehen sein kann, dass mit abnehmendem Abstand die Helligkeit der Lichtquellen des Innenlichtsystems zunimmt. Dabei kann in Verbindung mit der richtungsabhängigen Steuerung im Übrigen zusätzlich vorgesehen sein, dass weitere Lichtquellen zu- bzw. weggeschaltet werden. In einer besonders vorteilhaften Ausgestaltung kann die beschriebene Ansteuerung bei der Verwendung eines Außenlichtsystems und eines Innenlichtsystems derart erfolgen, dass die gesamte emittierte Lichtmenge des Außenlichtsystems und des Innenlichtsystems im Wesentlichen konstant bleibt. Auf diese Art ist eine "Lichtwaage" implementiert, die beispielsweise vorsehen kann, dass das Licht im Außenbereich von 100 % auf 0 % herabgeregelt wird, während das Licht im Innenbereich von 0 % auf 100 % hinaufgeregelt werden kann. Auf diese Weise wird gleichzeitig ein konstanter Energieverbrauch realisiert und auf die konkreten Bedürfnisse des Fahrers eingegangen.

Es kann beim erfindungsgemäßen Verfahren vorteilhaft sein, eine Art Umgebungsmodell zu schaffen, welches bestimmte Richtungsklassen und Abstandsklassen definiert. So kann vorgesehen sein, dass die Umgebung des Kraftfahrzeugs in wenigstens zwei Sektoren unterteilt ist, wobei eine den Sektor, in dem sich die Sendeeinrichtung befindet, beschreibende Ortsinformation verwendet wird. Eine derartige Ortsinformation ist einfach und unkompliziert auswertbar und kann letztlich sofort von den entsprechenden Steuergeräten weiterverwendet werden. In einer konkreten Ausgestaltung kann vorgesehen sein, dass die Umgebung um das Kraftfahrzeug in eine Vorfeldzone, eine hintere Zone und zwei Seitenzonen unterteilt ist, welche jeweils vier bestimmte Abstandsbereiche abgrenzende Sektoren umfassen. In einem solchen Fall werden also vier Zonen, insbesondere vorne, hinten, links und rechts, und vier Abstandsbereiche innerhalb der Zonen unterschieden.

Wie bereits beschrieben, kann allgemein vorgesehen sein, dass ein wenigstens eine, insbesondere mehrere Lichtquellen umfassendes Innenlichtsystems und/oder ein mehrere Lichtquellen umfassendes Außenlichtsystem angesteuert werden. Mit besonderem Vorteil kann, wie bereits beschrieben, eine Ansteuerung beider Beleuchtungssysteme erfolgen; es sind jedoch auch weitere/andere Beleuchtungssysteme denkbar, die angesteuert werden können. Zweckmäßigerweise kann die Ansteuerung anhand wenigstens eines in einer Speichereinrichtung des Kraftfahrzeugs abgelegten Profils erfolgen. Es kann also mittels eines Profils definiert werden, auf welche Art und Weise die Ortsinformation genutzt wird, also in Ansteuerungsbefehle für das Lichtsystem umgesetzt wird.

Dabei kann vorgesehen sein, dass wenigstens ein Profil durch eine Person ausgewählt und/oder verändert wird, insbesondere über eine Mensch-Maschine-Schnittstelle (MMI). Der Fahrer kann sich also im idealen Fall selbst durch Veränderung des Profils konfigurieren, welche Ausleuchtcharakteristik aus der Ortsinformation resultieren soll. Beispielsweise kann er die Helligkeit je nach Abstand bzw. Abstandsklasse einstellen und dergleichen. Dies kann insbesondere über eine Benutzerschnittstelle erfolgen, die auch zur Konfiguration anderer Fahrzeugsysteme dient. Gerade im oben bereits beschriebenen Fall einer Aufteilung in verschiedene Sektoren kann eine derartige Einstellung komfortabel durch den Fahrer vorgenommen werden, wobei die Einstellung dann als ein Profil gespeichert wird.

In weiterer Ausgestaltung der vorliegenden Erfindung kann vorgesehen sein, dass wenigstens ein einer bestimmten Person zugeordnetes Profil verwendet wird, wobei zusätzlich zu der Ortsinformation auch eine Identifikationsinformation der Person ermittelt und zur Auswahl eines Profils verwendet wird. Wird ein Kraftfahrzeug mithin von verschiedenen Personen genutzt, kann jede dieser Personen ein eigenes Profil anlegen, welches dann seine persönlichen, speziell auf ihn zugeschnittenen Einstellungen für die Auswertung der Ortsinformation zur Ansteuerung der Beleuchtungssysteme enthält. Dabei sieht das erfindungsgemäße Verfahren in dieser Ausgestaltung vor, auch vollkommen automatisch eine Identifikation der sich nähernden Person mit der Sendeeinrichtung vorzunehmen. Hierzu gibt es verschiedene Möglichkeiten, so dass beispielsweise vorgesehen sein kann, dass die Identifikationsinformation unter Berücksichtigung der Messdaten der Sensoreinrichtung, die Signale einer personalisierten Sendeeinrichtung empfängt, und/oder unter Berücksichtigung von Daten einer Kamera, insbesondere einer in einem Außenspiegel des Kraftfahrzeugs verbauten Kamera, ermittelt wird. Hierzu kann beispielsweise ein personalisierter Schlüssel (personal key) verwendet werden, der einer bestimmten Person zugeordnet ist. Die Sendeeinrichtung sendet dann Signale aus, die nicht nur für das spezielle Kraftfahrzeug, sondern auch für die Person spezifisch sind und von der Sensoreinrichtung bzw. einem der Sensoreinrichtung zugeordneten Steuergerät ausgewertet werden können. Zusätzlich, beispielsweise zur Plausibilisierung, oder auch alternativ können andere Varianten zur Ermittlung der Identifikationsinformation verwendet werden, beispielsweise kann eine Gesichtserkennung in Daten einer Kamera vorgenommen werden. Eine solche Kamera kann beispielsweise in einem Außenspiegel des Kraftfahrzeugs verbaut sein. Ersichtlich sind verschiedenste Möglichkeiten hier denkbar.

Wie bereits erwähnt, kann die Ansteuerung der Beleuchtungssysteme vorteilhafterweise im Hinblick auf den Energieverbrauch optimiert werden. Das bedeutet, dass die Ansteuerung zwar so erfolgt, dass der Weg des Fahrers zu dem Kraftfahrzeug bzw. vom Kraftfahrzeug weg hinreichend beleuchtet ist, aber Lichtquellen, die hierfür nicht erforderlich sind, erst gar nicht aktiviert werden, so dass hier Leistung eingespart werden kann. Zudem sei darauf hingewiesen, dass ein solcher Betrieb im Hinblick auf die allein notwendigen Lichtquellen der Beleuchtungssysteme auch die Nutzung der Lichtquellen verringert und somit die Lebensdauer der Lichtquellen erhöht.

Neben dem Verfahren betrifft die vorliegende Erfindung auch ein Kraftfahrzeug gemäß Patentanspruch 13. Das Steuergerät (wobei auch mehrere Steuergeräte verwendet werden können) ist mithin dazu ausgebildet, die Messdaten der Sensoreinrichtung zur Ermittlung einer die Position der Sendeeinrichtung beschreibenden Ortinformation zu nutzen und entsprechend die Beleuchtungssysteme anzusteuern. Sämtliche Ausführungen bezüglich des erfindungsgemäßen Verfahrens lassen sich analog auf das erfindungsgemäße Kraftfahrzeug übertragen, welches mithin dieselben Vorteile aufweist.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug mit einer in der Nähe befindlichen Sendeeinrichtung,
- Fig. 2: eine Aufteilung eines Bereichs der Fahrzeugumgebung in mehrere Sektoren, und
- Fig. 3: ein ein mögliches Beleuchtungskonzept anzeigender Graph.

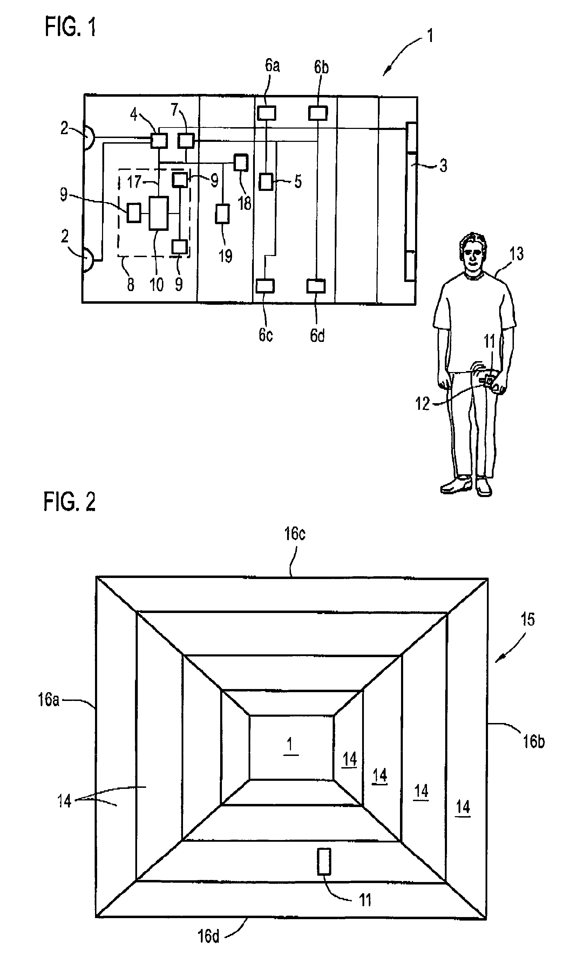

Fig. 1 zeigt ein erfindungsgemäßes Kraftfahrzeug 1. Es umfasst ein Außenlichtsystem und ein Innenlichtsystem als Beleuchtungssysteme, wobei das Außenlichtsystem im vorliegenden Beispiel zwei Frontscheinwerfer 2 und eine Heckbeleuchtung 3 als Lichtquellen umfasst, wobei selbstverständlich auch weitere Lichtquellen vorgesehen sein können. Gesteuert wird das Außenlichtsystem durch ein Steuergerät 4. Das Innenlichtsystem umfasst als Lichtquellen neben einer zentralen Mittenleuchte 5 vier seitlich angeordnete Leseleuchten 6a bis 6d, wobei auch hier selbstverständlich noch weitere Lichtquellen vorgesehen sein können. Das Innenlichtsystem wird über eine Steuereinrichtung 7 angesteuert.

Das Kraftfahrzeug 1 umfasst nun ferner eine Sensoreinrichtung 8, die hier drei in einer horizontalen Ebene an verschiedenen Positionen angeordnete Empfangseinrichtungen 9 umfasst. Die Messdaten der Empfangseinrichtungen 9 werden in einem Steuergerät 10 ausgewertet.

Die Empfangseinrichtungen 9 sind nun dazu ausgebildet, kontinuierlich oder intermittierend ausgesendete Funksignale einer Sendeeinrichtung 11 zu empfangen, die im vorliegenden Fall in einem Schlüssel 12 verbaut ist, den ein Fahrer 13 bei sich trägt. Es handelt sich dabei um einen personalisierten Schlüssel 12, das bedeutet im vorliegenden Fall, dass die Funksignale der Sendeeinrichtung 11 nicht nur für das Kraftfahrzeug 1 spezifisch sind, sondern auch speziell dem Fahrer 13 zugeordnet sind.

Die Sensoreinrichtung 8 ist jederzeit aktiv, also auch, wenn das Fahrzeug verriegelt ist und andere Systeme in einem Ruhezustand sind. Bewegt sich nun der Fahrer 13 in einem bestimmten Bereich im Umfeld des Kraftfahrzeugs 1, so können die Signale der Sendeeinrichtung 11 durch die Empfangseinrichtungen 9 empfangen werden. Aus den empfangenen Signalen, also den Messdaten, ermittelt das Steuergerät 10 nun zum einen eine Ortsinformation über die Position der Sendeeinrichtung 11, zum anderen aber auch eine Identifikationsinformation, die aus dem speziell ausgestalteten Signal der Sendeeinrichtung 11 folgt.

Die Ortsinformation kann vorliegend in der horizontalen Ebene mittels des TDOA-Verfahrens (Time Difference of Arrival) wie grundsätzlich bekannt ermittelt werden. Im vorliegenden Fall wird die Position der Sendeeinrichtung 11 einem Sektor 14 innerhalb des Bereichs 15 zugeordnet, wie in Fig. 2 dargestellt ist. Ersichtlich ist der Bereich 15 in vier jeweils einer Richtung zugeordnete Zonen 16a bis 16d unterteilt, nämlich eine Vorfeldzone 16a, eine hintere Zone 16b und zwei Seitenzonen 16c und 16d, nämlich die linke Seitenzone 16d und die rechte Seitenzone 16c. Jede Zone 16a bis 16d ist ersichtlich in vier Sektoren 14 aufgeteilt, die bestimmten Abstandsbereichen entsprechen. Wird mithin als Ortsinformation die Zuordnung der Sendeeinrichtung 11 zu einem bestimmten Sektor 14 verwendet, so enthält die Ortsinformation mithin einen Abstand und eine Richtung.

Ist eine vorbestimmte Bedingung gegeben, im vorliegenden Fall das Vorhandensein der Sendeeinrichtung 11 in dem Bereich 15, so aktiviert im vorliegenden Fall das Steuergerät 10 automatisch das Innenlichtsystem und das Außenlichtsystem, mithin die Steuergeräte 4 und 7. Gleichzeitig erhalten die Steuergeräte 4 und 7 die Ortsinformation. Dieser Datenaustausch erfolgt über ein Bussystem 17. Gleichzeitig mit der Ortsinformation erhalten die Steuergeräte 4, 7 auch die Identifikationsinformation, da die nun folgende Ansteuerung nach einem personalisierten Profil erfolgen kann, welches in einer Speichereinrichtung 18 abgelegt ist, die auch Teil eines der Steuergeräte sein kann. Es ist also in diesem Ausführungsbeispiel für eine Person, beispielsweise den Fahrer 13, möglich, das Profil, das die Art der Ansteuerung der Lichtquellen der Beleuchtungssysteme in Abhängigkeit der Ortsinformation bestimmt, auf sich persönlich anzupassen, was beispielsweise über eine Mensch-Maschine-Schnittstelle 19 geschehen kann. Beispielsweise kann er darin Einfluss auf die ihm zur Verfügung gestellte Helligkeit oder dergleichen nehmen. Es sei jedoch darauf hingewiesen, dass es selbstverständlich grundsätzlich auch möglich ist, das erfindungsgemäße Verfahren bzw. das erfindungsgemäße Kraftfahrzeug 1 ohne die Verwendung der Identifikationsinformation zu verwenden.

Um Energie einzusparen, ist im erfindungsgemäßen Verfahren in jedem Fall vorgesehen, die Richtungsinformation, die in der Ortsinformation enthalten ist, zu nutzen, indem hauptsächlich die in der entsprechenden Richtung liegenden Lichtquellen der Beleuchtungssysteme betrieben werden. Nähert sich der Fahrer beispielsweise dem Kraftfahrzeug von vorne, so können für das Außenlichtsystem die Scheinwerfer 2 betrieben werden, die Heckbeleuchtung 3 jedoch nicht. Für das Innenlichtsystem kann die Mittenleuchte 5 mit voller Helligkeit betrieben werden, wobei beispielsweise noch die Leseleuchten 6a und 6c mit geringerer Helligkeit betrieben werden können. Es sei an dieser Stelle darauf hingewiesen, dass, da die Ortsinformation ja kontinuierlich neu bestimmt wird, bei einem Wechsel des Sektors 14 durch den Fahrer 13 durchaus auch ein Wechsel der Zone 16a bis 16d auftreten kann, so dass dann auch entsprechend das Ansteuerungsschema gewechselt wird.

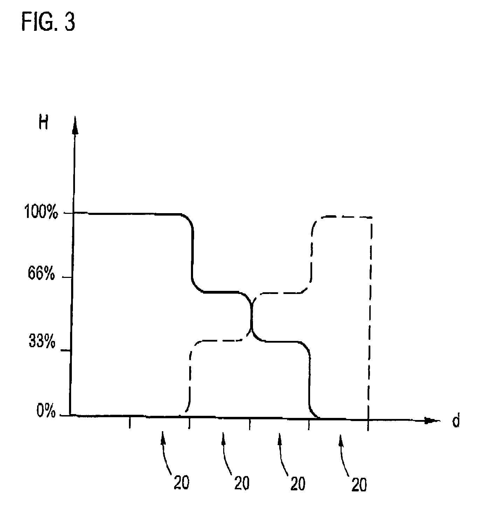

Zudem spielt noch die in der Nennung der Sektoren 14 enthaltene Abstandsinformation eine Rolle beim erfindungsgemäßen Verfahren, wie durch die Fig. 3 dargestellt werden soll. Im dortigen Graphen ist die Helligkeit H gegen den Abstand d aufgetragen, wobei auf der Abszisse die die Sektoren 14 einer Zone 16a bis 16d definierende Abstandsbereiche 20 markiert sind. Dabei zeigt die gestrichelte Kurve die Helligkeit der Lichtquellen des Außenlichtsystems in Abhängigkeit vom Abstand d, die durchgezogene Kurve zeigt die Helligkeit der Lichtquellen des Innenlichtsystems abhängig vom Abstand d.

Ersichtlich erfolgt eine Dimmung der Lichtquellen des Außenlichtsystems derart, dass sie mit abnehmendem Abstand von 100 % Helligkeit auf 0 % Helligkeit heruntergeregelt werden. Die Dimmung der Lichtquellen des Innenlichtsystems erfolgt genau umgekehrt: die Helligkeit steigt von 0 % langsam auf 100 % an. Ersichtlich ergibt die Summe der Helligkeiten immer 100 %, so dass also eine Lichtwaage vorliegt. Bei Verlassen der äußersten Sektoren 14 werden die Lichtquellen des Innenlichtsystems und des Außenlichtsystems ohnehin deaktiviert. Bei einer Position innerhalb des Kraftfahrzeugs bleiben die Lichtquellen des Innenlichtsystems normalerweise zunächst ohnehin aktiviert.

Es sei darauf hingewiesen, dass selbstverständlich bei einer feineren Einteilung in verschiedene Sektoren 14 bzw. gar bei einer kontinuierlichen Betrachtung auch eine feinere Abstufung bzw. eine Kennlinie verwendet werden kann. Es können auch unterschiedliche Kennlinien für verschiedene Lichtquellen eines Beleuchtungssystems eingesetzt werden, wobei es jedoch durchaus möglich ist, die Helligkeit verschiedener Lichtquellen einfach in Abhängigkeit der Richtung zu skalieren. Ersichtlich sind verschiedenste Ausgestaltungen denkbar, um die Ortsinformation, konkret die Abstandsinformation und die Richtungsinformation, ausnutzen zu können.

Es sei schließlich noch darauf hingewiesen, dass, falls eine Identifikation im Hinblick auf abgelegte Profile erfolgen soll, auch andere Wege zur Ermittlung der Identifikationsinformation genutzt werden können, beispielsweise Daten einer Kamera, die beispielsweise in einem Außenspiegel angeordnet sein kann und deren Daten mittels einer Gesichtserkennung verarbeitet werden.

## Patentansprüche

1. Verfahren zur Steuerung wenigstens eines Beleuchtungssystems eines Kraftfahrzeugs (1), wobei eine die Position einer Sendeeinrichtung (11), insbesondere in einem Schlüssel (12), beschreibende Ortsinformation ermittelt wird und der Betrieb des Beleuchtungssystems in Abhängigkeit der Ortsinformation erfolgt, wobei eine eine den Abstand von dem Kraftfahrzeug (1) beschreibende Abstandsinformation und eine Richtungsinformation bezüglich des Kraftfahrzeugs (1) enthaltende Ortsinformation ermittelt und verwendet wird, wobei die Helligkeit wenigstens einer Lichtquelle wenigstens eines Beleuchtungssystems in Abhängigkeit des Abstands geregelt wird,
**dadurch gekennzeichnet,**
**dass** die Ortsinformation aus mittels einer kraftfahrzeugseitigen, wenigstens zwei Empfangseinrichtungen (9) aufweisenden Sensoreinrichtung (8) zum Empfang von von der Sendeeinrichtung (11) ausgesendeten Signalen gewonnenen Messdaten mittels eines TOA-Verfahrens oder eines TDOA-Verfahrens ermittelt wird.

2. Verfahren nach Anspruch 1,
**dadurch gekennzeichnet,**
**dass** wenigstens eine Lichtquelle des oder wenigstens eines Beleuchtungssystems aktiviert wird, wenn die Ortsinformation eine Position der Sendeeinrichtung (11) in einem vorbestimmten Bereich (15) um das Kraftfahrzeug (1) anzeigt und/oder alle Lichtquellen des oder aller Beleuchtungssysteme deaktiviert werden, wenn die Ortsinformation eine Position der Sendeeinrichtung außerhalb des Bereichs (15) anzeigt.

3. Verfahren nach Anspruch 1 oder 2,
**dadurch gekennzeichnet,**
**dass** bei einem mehrere Lichtquellen umfassenden Beleuchtungssystem eine Aktivierung und/oder eine Regelung der Helligkeit der verschiedenen Richtungen zugeordneten Lichtquellen abhängig von der Richtung erfolgt.

4. Verfahren nach einem der vorangehenden Ansprüche,
**dadurch gekennzeichnet,**
**dass** bei einem Außenlichtsystem die Helligkeit der wenigstens einen Lichtquelle mit abnehmendem Abstand abnimmt und/oder bei einem Innenlichtsystem die Helligkeit der wenigstens einen Lichtquelle mit abnehmendem Abstand zunimmt, insbesondere bei der Verwendung eines Außenlichtsystems und eines Innenlichtssystems derart, dass die gesamte emittierte Lichtmenge des Außenlichtsystems und des Innenlichtsystems im Wesentlichen konstant bleibt.

5. Verfahren nach einem der vorangehenden Ansprüche,
**dadurch gekennzeichnet,**
**dass** die Umgebung des Kraftfahrzeugs (1) in wenigstens zwei Sektoren (14) unterteilt ist, wobei eine den Sektor (14), in dem sich die Sendeeinrichtung (11) befindet, beschreibende Ortsinformation verwendet wird.

6. Verfahren nach Anspruch 5,
**dadurch gekennzeichnet,**
**dass** die Umgebung um das Kraftfahrzeug (1) in eine Vorfeldzone (16a), eine hintere Zone (16b) und zwei Seitenzonen (16c, 16d) unterteilt ist, welche jeweils vier bestimmte Abstandsbereiche abgrenzende Sektoren (14) umfassen.

7. Verfahren nach einem der vorangehenden Ansprüche,
**dadurch gekennzeichnet,**
**dass** ein wenigtens eine, insbesondere mehrere Lichtquellen umfassendes Innenlichtsystem und/oder ein mehrere Lichtquellen umfassenden Außenlichtsystem angesteuert werden.

8. Verfahren nach einem der vorangehenden Ansprüche,
**dadurch gekennzeichnet,**
**dass** die Ansteuerung anhand wenigstens eines in einer Speichereinrichtung (18) des Kraftfahrzeugs (1) abgelegten Profils erfolgt.

9. Verfahren nach Anspruch 8,
**dadurch gekennzeichnet,**
**dass** das wenigstens eine Profil durch eine Person ausgewählt und/oder verändert wird, insbesondere über eine Mensch-Maschine-Schnittstelle (19).

10. Verfahren nach Anspruch 8 oder 9,
**dadurch gekennzeichnet,**
**dass** wenigstens ein einer bestimmten Person zugeordnetes Profil verwendet wird, wobei zusätzlich zu der Ortsinformation auch eine Identifikationsinformation der Person ermittelt und zur Auswahl eines Profils verwendet wird.

11. Verfahren nach Anspruch 10,
**dadurch gekennzeichnet,**
**dass** die Identifikationsinformation unter Berücksichtigung der Messdaten der Sensoreinrichtung (8), die Signale einer personalisierten Sendeeinrichtung (11) empfängt, und/oder unter Berücksichtigung von Daten einer Kamera, insbesondere einer in einem Außenspiegel des Kraftfahrzeugs (1) verbauten Kamera, ermittelt wird.

12. Verfahren nach einem der vorangehenden Ansprüche,
**dadurch gekennzeichnet,**
**dass** die Ansteuerung der Beleuchtungssysteme im Hinblick auf den Energieverbrauch optimiert wird, wobei zur Beleuchtung eines Weges zum Kraftfahrzeug (1) oder vom Kraftfahrzeug (1) weg nicht erforderliche Lichtquellen nicht aktiviert werden.

13. Kraftfahrzeug (1), umfassend eine wenigstens zwei Empfangseinrichtungen (9) aufweisende Sensoreinrichtung (8) zum Empfang von von einer Sendeeinrichtung (11), insbesondere in einem Schlüssel (12), ausgesendeten Signalen, wenigstens ein Beleuchtungssystem und ein zur Durchführung eines Verfahrens nach einem der vorangehenden Ansprüche ausgebildetes Steuergerät (10).

## Claims

1. Method of controlling at least one lighting system of a motor vehicle (1) wherein
location information describing the position of an emitter device (11), more particularly in a key (12) is determined and the operation of the lighting system takes place as a function of the location information, wherein location information, containing distance information, describing the distance from the motor vehicle (1) and direction information concerning the motor vehicle (1), is determined and used, wherein the brightness of at least one light source of at least one lighting system is regulated as a function of the distance,
**characterised in that** the location information is determined by means of a sensor device (8) on the motor vehicle having at least two receiver devices (9) for receiving measuring data obtained from signals emitted by the emitter device (11) by means of a TOA process or a TDOA process.

2. Method according to claim 1
**characterised in that**
at least one light source of the or at least one lighting system is activated when the location information indicates a positon of the emitter device (11) in a predetermined area (15) around the motor vehicle (1) and/or all light source of the or all lighting systems are deactivated when the location information indicates a position of the emitter device outside the area (15).

3. Method according to claim 1 or 2
**characterised in that**
in a lighting system comprising several light sources, activation and/or regulation of the brightness of the light source assigned to the various directions takes place as a function of the direction.

4. Method according to any one of the preceding claims
**characterised in that**
in an external lighting system the brightness of the at least one light source decreases with decreasing distance and/or in an internal lighting system the brightness of the at least one light source increases with decreasing distances, more particularly when using an external lighting system and an internal lighting system in such a way that the entire emitted light quantity of the external light system and the internal light system essentially remains constant.

5. Method according to any one of the preceding claims
**characterised in that**
the area surrounding the motor vehicle (1) is divided into at least two sectors (14) wherein location information describing the sector (14) in which the emitter device (11) is located is used.

6. Method according to claim 5
**characterised in that**
the area surrounding the motor vehicle (1) is divided into a front field zone (16a), a rear field zone (16b) and two side zones (16c, 16d), which each form sectors (14) delimiting four defined distance areas.

7. Method according to any one of the previous claims
**characterised in that**
an internal lighting system comprising at least one, more particularly several light sources and/or an external lighting system comprising several light sources are controlled.

8. Method according to any one of the preceding claims
**characterised in that**
the control takes place by means of at least one profile stored in a memory device (18) of the motor vehicle (1).

9. Method according to claim 8
**characterised in that**
the at least one profile is selected and/or changed by a person, more particularly via a person-machine interface (19).

10. Method according to claim 8 or 9
**characterised in that**
at least one profile assigned to a specific person is used, wherein in addition to the location information, information identifying the person is determined and used for selecting a profile.

11. Method according to claim 10
**characterised in that**
the identification information is determined taking into account the measuring data of the sensor device (8) which receives signals of a personalised emitter device (11) and/or taking into account data of a camera, more particularly a camera built into an external mirror of the motor vehicle (1).

12. Method according to any one of the preceding claims
**characterised in that**
the control of the lighting systems is optimised in terms of energy consumption, wherein to illuminate a path to the motor vehicle (1) or from the motor vehicle (1) light sources which are not necessary are not activated.

13. Motor vehicle (1) comprising a sensor device (8) having a least two receiver devices (9) for receiving signals emitted by an emitter device (11), more particularly in a key (12), at least one lighting system and a control device (10) for implementing a method in accordance with any one of the preceding claims.

## Revendications

1. Procédé pour la commande d'au moins un système d'éclairage d'un véhicule automobile (1), une information de localisation qui décrit la position d'un dispositif émetteur (11), notamment dans une clé (12), étant déterminée et le fonctionnement du système d'éclairage s'effectuant en fonction de l'information de localisation, une information de localisation qui contient une information de distance décrivant la distance au véhicule automobile (1) et une information de direction par rapport au véhicule automobile (1) étant déterminée et utilisée, la luminosité d'au moins une source lumineuse d'au moins un système d'éclairage étant réglée en fonction de la distance,
**caractérisé en ce que** l'on détermine l'information de localisation à partir de données mesurées obtenues au moyen d'un dispositif capteur (8) installé côté véhicule automobile et comportant au moins deux dispositifs récepteurs (9) pour la réception de signaux émis par le dispositif émetteur (11) au moyen d'un procédé TOA (Time of Arrival) ou d'un procédé TDOA (Time Difference of Arrival).

2. Procédé selon la revendication 1, **caractérisé en ce que** l'on active au moins une source lumineuse du système d'éclairage ou d'au moins un système d'éclairage lorsque l'information de localisation indique une position du dispositif émetteur (11) dans une zone prédéterminée (15) autour du véhicule automobile (1) et/ou on désactive toutes les sources lumineuses du système d'éclairage ou de tous les systèmes d'éclairage lorsque l'information de localisation indique une position du dispositif émetteur en dehors de la zone (15).

3. Procédé selon la revendication 1 ou 2, **caractérisé en ce que**, dans le cas d'un système d'éclairage comprenant plusieurs sources lumineuses, on effectue en fonction de la direction une activation et/ou un réglage de la luminosité des sources lumineuses associées à différentes directions.

4. Procédé selon l'une des revendications précédentes, **caractérisé en ce que**, dans le cas d'un système lumineux extérieur, on diminue la luminosité de l'au moins une source lumineuse lorsque la distance diminue et/ou, dans le cas d'un système lumineux intérieur, on augmente la luminosité de l'au moins une source lumineuse lorsque la distance diminue, notamment lors de l'utilisation d'un système lumineux extérieur et d'un système lumineux intérieur de telle sorte que la quantité totale de lumière émise du système lumineux extérieur et du système lumineux intérieur reste globalement constante.

5. Procédé selon l'une des revendications précédentes, **caractérisé en ce que** l'environnement du véhicule automobile (1) est divisé en au moins deux secteurs (14), une information de localisation qui décrit le secteur (14) dans lequel le dispositif émetteur (11) se trouve étant utilisée.

6. Procédé selon la revendication 5, **caractérisé en ce que** l'environnement autour du véhicule automobile (1) est divisé en une zone avant (16a), une zone arrière (16b) et deux zones latérales (16c, 16d) qui comprennent chacune quatre secteurs (14) délimitant des plages de distance déterminées.

7. Procédé selon l'un des revendications précédentes, **caractérisé en ce que** l'on commande un système lumineux intérieur comprenant au moins une source lumineuse, notamment plusieurs sources lumineuses, et/ou un système lumineux extérieur comprenant plusieurs sources lumineuses.

8. Procédé selon l'un des revendications précédentes, **caractérisé en ce que** la commande s'effectue à l'aide d'au moins un profil enregistré dans une mémoire (18) du véhicule automobile (1).

9. Procédé selon la revendication 8, **caractérisé en ce que** l'au moins un profil est choisi et/ou modifié par une personne, notamment par l'intermédiaire d'une interface homme-machine (19).

10. Procédé selon la revendication 8 ou 9, **caractérisé en ce que** l'on utilise au moins un profil associé à une personne déterminée, une information d'identification de la personne étant aussi déterminée en plus de l'information de localisation et utilisée pour le choix d'un profil.

11. Procédé selon la revendication 10, **caractérisé en ce que** l'on détermine l'information d'identification en tenant compte des données mesurées du dispositif capteur (8) qui reçoit des signaux d'un dispositif capteur (11) personnalisé et/ou en tenant compte de données d'une caméra, notamment d'une caméra installée dans un miroir extérieur du véhicule automobile (1).

12. Procédé selon l'un des revendications précédentes, **caractérisé en ce que** l'on optimise la commande des systèmes d'éclairage du point de vue de la consommation d'énergie, des sources lumineuses non nécessaires pour l'éclairage d'un trajet vers le véhicule automobile (1) ou à partir du véhicule automobile (1) n'étant pas activées.

13. Véhicule automobile (1), avec un dispositif capteur (8) comportant au moins deux dispositifs récepteurs (9) pour la réception de signaux émis par un dispositif émetteur (11), notamment dans une clé (12), avec au moins un système d'éclairage et avec un appareil de commande (10) conçu pour la mise en oeuvre d'un procédé selon l'une des revendications précédentes.
